# NOUVEAU FASCICULE DE BREVET EUROPEEN

(11) **EP 2 946 089 B2**
(45) Date de publication et mention de la décision concernant l'opposition: **03.05.2023**
(45) Mention de la délivrance du brevet: 20.09.2017
(21) Numéro de dépôt: 14703117.3
(22) Date de dépôt: 09.01.2014
(51) Int. Cl.: F02C 7/045, B64D 29/06, F02C 7/057, F02K 3/062, B64D 33/02

(54) **MANCHE D'ENTRÉE D'AIR ACOUSTIQUEMENT OPTIMISÉE**
AKUSTISCH OPTIMIERTE LUFTEINLASSHÜLSE
ACOUSTICALLY OPTIMIZED AIR INLET SLEEVE

(30) Priorité: 18.01.2013 FR 1350449
(43) Date de publication de la demande: 25.11.2015
(73) Titulaire: Safran Aircraft Engines, 75015 Paris (FR)
(72) Inventeur: ROMANO, Pascal, F-77550 Moissy-Cramayel Cedex (FR); BONNEAU, Virginie, F-77550 Moissy-Cramayel Cedex (FR); SENSIAU, Claude, F-77550 Moissy-Cramayel Cedex (FR)
(74) Mandataire: Cabinet Beau de Loménie
(86) Numéro de dépôt international: PCT/FR2014/050026
(87) Numéro de publication internationale: WO 2014/111642

(56) Documents cités:
- EP-A2- 1 607 603
- EP-A2- 2 072 779
- US-A- 3 533 486
- US-A- 4 023 644

## Description

La présente invention concerne le domaine aéronautique et plus particulièrement les manches d'entrée d'air de nacelles de turbomachines, turboréacteurs et turbopropulseurs d'avion.

De façon classique, les moteurs d'avion sont enveloppés dans des nacelles situées à divers endroits de l'avion, sur ou sous une aile ou encore sur le fuselage arrière par exemple, et comprenant une manche d'entrée d'air orientée dans l'axe de celui-ci, avec un bord d'attaque globalement annulaire à l'avant, et présentant un profil aérodynamique destiné à assurer le guidage de l'air aspiré par le moteur.

Les émissions sonores de ces moteurs ont pour origine principale d'une part le jet en sortie de tuyère et d'autre part le bruit de la soufflante résultant de la rotation et du passage des aubes mobiles devant le carter de la soufflante.

Aux régimes transsoniques où les nombres de Mach de l'écoulement sont localement supérieurs à 1 sur les aubes, des ondes de chocs se forment aux bord d'attaque de ces aubes et, en décrivant une spirale, se propagent vers l'amont de la manche avec une amplitude décroissante, de sorte à créer un bruit de raies multiple de la fréquence de passage de ces aubes.

Afin de limiter les effets du bruit émis vers l'avant par le moteur en direction du sol et donc particulièrement audibles lors des opérations de décollage et d'atterrissage, on a proposé d'utiliser des nacelles ayant un profil d'entrée en forme de biseau. Le plan d'entrée du moteur est ainsi incliné vers l'arrière par allongement de la partie inférieure de la manche d'entrée d'air. Toutefois, cet allongement s'oppose aux contraintes de masse actuelles qui tendent au contraire à raccourcir au maximum les manches d'entrée d'air.

Une autre solution, connue notamment pour réduire le bruit de choc, est illustrée par la demande EP1783346 qui propose de modifier le carter de soufflante en réalisant dans celui-ci des rainures ou raccords (splices) de façon à empêcher la remontée des ondes de chocs dans la manche d'entrée d'air. Malheureusement, ces rainures entrainent une dégradation notable des performances acoustiques de la manche sur les autres types de bruit et elles ont en outre une influence négative sur les performances du moteur pendant le régime de croisière. Une structure de nacelle selon l'art antérieur est connue du document US4023644.

### Objet et résumé de l'invention

La demanderesse s'est donc fixée l'objectif de trouver un moyen simple d'atténuer le bruit provoqué par la soufflante d'un moteur d'avion et notamment le bruit de choc au décollage sans apporter aucune nuisance sur les performances aérodynamiques en régime de croisière.

Ce but est atteint par une structure de nacelle conformément à la revendication 1.

Avec cette structure rétractable assurant une continuité circonférentielle et radiale, il devient possible d'obtenir une diminution sensible voire une suppression du bruit de choc acoustique émis par les aubes mobiles de la soufflante sans influencer les performances au régime de croisière du moteur.

Avantageusement, la structure de nacelle comprend un actionneur relié à ledit anneau, une unité de commande en communication avec ledit actionneur et un capteur, ledit capteur détectant des premier et second états correspondant respectivement aux dites positions déployée et escamotée, ladite unité de commande étant configurée pour commander le déplacement dudit anneau entre lesdites positions déployée et escamotée en réponse aux dits premier et second états détectés par ledit capteur.

Lorsque ladite soufflante est une soufflante de turbomachine d'aéronef, lesdits premier et second états correspondent respectivement à l'engagement des opérations de décollage ou d'atterrissage dudit aéronef et à l'engagement du régime de croisière dudit aéronef.

De préférence, ledit anneau est formé par une pluralité de segments annulaires disposés de manière circonférentielle.

La présente invention concerne également une turbomachine d'aéronef comportant la structure de nacelle précitée et un procédé d'atténuation de bruit dans un canal d'alimentation en air d'une structure de nacelle conformément à la revendication 5.

### Brève description des dessins

D'autres caractéristiques et avantages de l'invention seront mieux compris à la lecture de la description qui va suivre d'un mode de réalisation de l'invention en référence aux dessins annexés sur lesquels :
La figure 1 représente une vue en demi-coupe partielle longitudinale d'une nacelle entourant une soufflante de turbomachine et munie d'un système de réduction des bruits acoustiques selon l'invention,
La figure 1A représente en perspective la manche d'entrée d'air de la nacelle de la figure 1,
La figure 2 représente une vue développée de la manche d'entrée d'air de la nacelle de la figure 1A, et
La figure 3 représente une vue en demi-coupe partielle longitudinale de la nacelle de la figure 1 munie d'un exemple d'un système de réduction des bruits acoustiques.

### Description d'un mode préférentiel de réalisation de l'invention

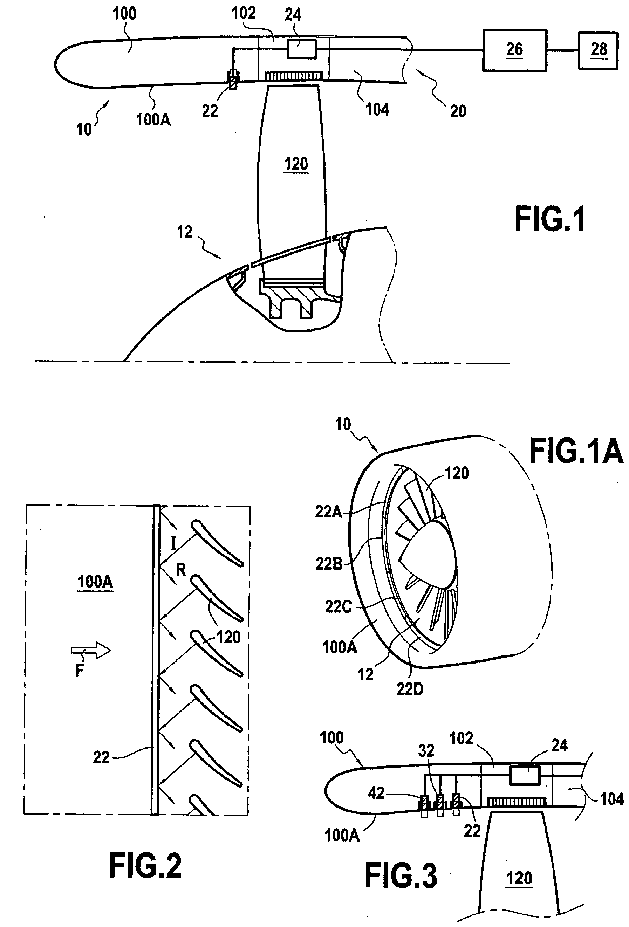

La figure 1 représente en demi-coupe longitudinale partielle une nacelle 10 entourant une soufflante 12 d'un groupe motopropulseur de turbomachine, par exemple un turboréacteur d'avion. Classiquement, cette nacelle comporte, disposés dans le sens du flux d'air la traversant (de gauche à droite sur la figure 1 et référencée F sur la figure 2), une partie annulaire avant ou manche d'entrée d'air 100, une partie annulaire intermédiaire ou carter de soufflante 102 et une partie annulaire arrière 104. La nacelle est en général solidarisée à la structure de l'avion au moyen d'un mat ou pylône (non représenté).

La manche d'entrée d'air et particulièrement sa surface intérieure 100A formant un canal d'alimentation en air est conformée pour assurer un écoulement sans turbulence aux différents régimes de vol, décollage, croisière et atterrissage depuis son bord d'attaque jusqu'aux aubes mobiles de la soufflante.

Actuellement, les allers retours entre les mécaniciens, les aérodynamiciens et les acousticiens lors de la phase de conception des aubes mobiles de soufflante deviennent de plus en plus complexes tant les enjeux sont importants et les objectifs de chaque domaine ambitieux et parfois antagonistes. En outre, chaque paramètre modifié sur une aube influence différemment les performances mécanique, aérodynamique et acoustique, de sorte qu'il devient essentiel de trouver une solution technique qui permette une réduction de bruit sans impacter le dessin de l'aube mobile de soufflante.

La présente invention apporte cette solution avec un système actif de réduction (voir de suppression) du bruit émis vers l'avant de la manche d'entrée d'air et notamment du bruit de choc issue de la soufflante sans influencer les performances en régime de croisière qui est un régime clé pour les performances du moteur.

Comme le montrent les figures 1 et 1A, ce système 20 consiste à incorporer dans la manche d'entrée d'air 100, en amont des aubes mobiles 120 de la soufflante 12, au moins un anneau 22 mobile sélectivement entre une position déployée, dans laquelle cet anneau est déplacé radialement vers l'intérieur depuis la surface intérieure 100A de la manche d'entrée d'air et sans s'en écarter pour former un obstacle continu aux ondes de chocs issues de la soufflante, et une position escamotée (en traits pointillés), dans laquelle cet anneau est déplacé radialement vers l'extérieur à partir de la position déployée précédente pour venir affleurer la surface intérieure et ainsi reconstituer le profil aérodynamique du canal d'alimentation en air. La continuité circonférentielle et radiale ainsi obtenue garantie une barrière aux ondes de chocs, lesquelles sont situées vers 80 à 90% de hauteur de veine sur toute la circonférence.

L'anneau 22 est actionné via un ou plusieurs actionneurs 24 relié(s) à une unité de commande 26, elle-même en liaison avec un capteur 28 en mesure de détecter des premier et second états correspondant respectivement aux deux positions déployée et escamotée de l'anneau. Ainsi, l'unité de commande est configurée pour commander le déplacement de l'anneau entre ces deux positions en réponse à chacun des premier et second états détectés par le capteur. Ceci permet de désactiver le système 20 au point de croisière où les performances aérodynamiques auraient été dégradées et de ne l'utiliser qu'aux points à finalité acoustique (décollage, atterrissage ou approche).

Comme l'illustre la figure 1A, l'anneau 22 est formé par une pluralité de segments annulaires (par exemple 22A, 22B, 22C, 22D) disposés de manière circonférentielle (avec une continuité azimutale) autour de la manche d'entrée d'air 100, le nombre et les dimensions (longueur déployée) seront dépendants des dimensions de la soufflante sur laquelle sera mis en place le système de réduction de bruit, de l'amplitude du choc et de la décroissance de celui-ci. Par exemple, pour un moteur de faible diamètre (48 pouces soit environ 1,2 mètres) destiné à l'aviation civile régionale pour lequel le bruit de choc n'est pas critique car la vitesse de rotation du moteur est faible, il semble suffisant de ne positionner qu'un seul anneau. Cet anneau pourra être disposé à quelques dizaines de cm (typiquement 30 à 40 cm) du bord d'attaque des aubes de soufflante et mesurer quelques mm de hauteur et d'épaisseur (typiquement entre 1 et 5 mm). Avec une optimisation judicieuse, on peut obtenir des gains de plusieurs dB dans la réduction des bruits de chocs incident I remontant des aubes de la soufflante et réfléchis R par le ou les anneaux (voir la figure 2).

La figure 3 illustre à titre d'information uniquement un système 20 de réduction de bruit dans lequel la manche d'entrée d'air 100 comporte trois anneaux 22, 32, 42 espacés axialement en amont de la soufflante 12 et qui comme précédemment peuvent chacun prendre une position déployée (en traits pointillés) et une position escamotée. Dans la position déployée, ces trois anneaux dont le plus proche de la soufflante pourra être situé à une trentaine de centimètres de celui-ci, seront de préférence espacés entre eux d'une dizaine de centimètres. Pour des raisons d'encombrement, chaque anneau mesure au plus quelques millimètres d'épaisseur et de hauteur.

Comme dans l'exemple précédent, la commande du déplacement des anneaux est réalisée à partir d'une unité de commande selon le processus consistant à: détecter un premier état ; en réponse à ce premier état, déployer simultanément (ou successivement) ces anneaux radialement vers l'intérieur depuis la surface intérieure de la manche d'entrée d'air définissant un canal d'alimentation en air, pour fournir un obstacle aux ondes de chocs issues de la soufflante ; détecter un second état différent du premier ; et en réponse à ce second état, escamoter les anneaux radialement vers l'extérieur à partir de la position déployée pour venir affleurer la surface intérieure et ainsi reconstituer le canal d'alimentation en air.

Lorsque la soufflante est une soufflante de turbomachine d'aéronef, ces premier et second états correspondent alors respectivement à l'engagement des opérations de décollage ou d'atterrissage de l'aéronef et à l'engagement de son régime de croisière.

## Revendications

1. Structure de nacelle (10) entourant une soufflante (12) d'un moteur d'avion ayant une pluralité d'aubes (120) montée sur un cône muni d'une pointe, la structure de nacelle comprenant :
une manche d'entrée d'air (100) ayant une surface intérieure (100A) définissant un canal d'alimentation en air ; et
un anneau unique (22) disposé dans ladite manche d'entrée d'air uniquement entre la pointe de cône et un bord d'attaque de ladite pluralité d'aubes de soufflante, ledit anneau formé par une pluralité de segments annulaires disposés de manière circonférentielle étant mobile sélectivement entre une position déployée, dans laquelle ledit anneau est déplacé radialement vers l'intérieur depuis ladite surface intérieure et sans s'en écarter pour fournir un obstacle à continuité circonférentielle et radiale aux ondes de chocs incidentes issues de ladite soufflante et réfléchies sur ledit anneau, et une position escamotée, dans laquelle ledit anneau est déplacé radialement vers l'extérieur à partir de ladite position déployée pour venir affleurer ladite surface intérieure et ainsi reconstituer ledit canal d'alimentation en air, ledit anneau étant disposé axialement à 30 à 40 centimètres dudit bord d'attaque des aubes de soufflante et mesurant 1 à 5 millimètres d'épaisseur et de hauteur, et le moteur d'avion ayant un diamètre d'environ 1,2 mètre.

2. Structure de nacelle selon la revendication 1, **caractérisée en ce qu'**elle comprend un actionneur (24) relié au dit anneau, un dispositif de commande (26) en communication avec ledit actionneur et un capteur (28), ledit capteur détectant des premier et second états correspondant respectivement aux dites positions déployée et escamotée, ledit dispositif de commande étant configuré pour commander le déplacement dudit anneau entre lesdites positions déployée et escamotée en réponse aux dits premier et second états détectés par ledit capteur.

3. Structure de nacelle selon la revendication 2, dans laquelle ladite soufflante est une soufflante de turbomachine d'aéronef et lesdits premier et second états correspondent respectivement à l'engagement des opérations de décollage ou d'atterrissage dudit aéronef et à l'engagement du régime de croisière dudit aéronef.

4. Structure de nacelle selon la revendication 1 ou la revendication 2, **caractérisée en ce que** ledit anneau est formé par une pluralité de segments annulaires (22A- 22D) disposés de manière circonférentielle.

5. Procédé de réduction de bruit dans un canal d'alimentation en air d'une structure de nacelle (10) entourant une soufflante d'un moteur d'avion ayant une pluralité d'aubes (120) montée sur un cône muni d'une pointe, comprenant les étapes consistant à:
détecter un premier état ;
en réponse au dit premier état, déployer un anneau unique (22) formé par une pluralité de segments annulaires disposés de manière circonférentielle et disposé uniquement entre la pointe de cône et un bord d'attaque de ladite pluralité d'aubes de soufflante, radialement vers l'intérieur depuis une surface intérieure (100A) de ladite structure de nacelle définissant un canal d'alimentation en air et sans s'en écarter, pour former un obstacle à continuité circonférentielle et radiale aux ondes de chocs incidentes issues de ladite soufflante et réfléchies sur ledit anneau ;
détecter un second état différent du premier ; et
en réponse au dit second état, escamoter ledit anneau radialement vers l'extérieur à partir de ladite position déployée pour venir affleurer ladite surface intérieure et ainsi reconstituer ledit canal d'alimentation en air, ledit anneau étant disposé axialement à 30 à 40 centimètres dudit bord d'attaque des aubes de soufflante et mesurant 1 à 5 millimètres d'épaisseur et de hauteur, et le moteur d'avion ayant un diamètre d'environ 1,2 mètre.

6. Procédé de réduction de bruit selon la revendication 5, dans lequel ladite soufflante est une soufflante de turbomachine d'aéronef et lesdits premier et second états correspondent respectivement à l'engagement des opérations de décollage ou d'atterrissage dudit aéronef et à l'engagement du régime de croisière dudit aéronef.

7. Turbomachine d'aéronef comportant une structure de nacelle selon l'une quelconque des revendications 1 à 4.

## Patentansprüche

1. Gondelstruktur (10), die ein Gebläse (12) eines Flugzeugtriebwerks mit einer Vielzahl von Schaufeln (120) umgibt, das auf einem mit einer Spitze versehenen Konus angebracht ist, wobei die Gondelstruktur umfasst:
einen Lufteinlassansatz (100) mit einer Innenfläche (100A), welche einen Luftzuführkanal definiert, und
einen einzigen Ring (22), der in dem Lufteinlassansatz nur zwischen der Konusspitze und einer Eintrittskante der Vielzahl von Gebläseschaufeln angeordnet ist, wobei der von einer Vielzahl ringförmiger, in Umfangsrichtung angeordneten Segmenten gebildete Ring selektiv zwischen einer ausgefahrenen Position, in welcher der Ring von der Innenfläche aus und ohne sich hiervon entfernend radial nach innen bewegt wird, um ein Hindernis mit Umfangs- und Radialkontinuität für die von dem Gebläse ausgehenden auf dem Ring auftreffenden und reflektierten Stoßwellen bereitzustellen, sowie einer eingefahrenen Position beweglich ist, in welcher der Ring aus der ausgefahrenen Position radial nach außen bewegt wird, um die Innenfläche bündig abzuschließen und somit den Luftzuführkanal wiederherzustellen, wobei der Ring axial 30 bis 40 Zentimeter von der Eintrittskante der Schaufeln des Gebläses angeordnet und 1 bis 5 Millimeter an Dicke und Höhe misst und das Flugzeugtriebwerk einen Durchmesser von zirka 1,2 Meter hat.

2. Gondelstruktur nach Anspruch 1, **dadurch gekennzeichnet, dass** sie einen Aktor (24), welcher mit dem Ring verbunden ist, eine Steuervorrichtung (26), die mit dem Aktor in Verbindung steht, sowie einen Sensor (28) umfasst, wobei der Sensor (28) einen ersten und einen zweiten Zustand, die der ausgefahrenen bzw. der eingefahrenen Position entsprechen, erfasst, wobei die Steuervorrichtung dazu ausgelegt ist, die Bewegung des Rings zwischen der ausgefahrenen und der eingefahrenen Position als Reaktion auf die durch den Sensor erfassten ersten und zweiten Zustände zu steuern.

3. Gondelstruktur nach Anspruch 2, wobei das Gebläse ein Gebläse einer Turbomaschine eines Luftfahrzeugs ist und der erste und der zweite Zustand dem Einsatz der Start- oder Landevorgänge des Luftfahrzeugs bzw. dem Einsatz der Reiseflugdrehzahl des Luftfahrzeugs entsprechen.

4. Gondelstruktur nach Anspruch 1 oder Anspruch 2, **dadurch gekennzeichnet, dass** der Ring durch eine Vielzahl von in Umfangsrichtung angeordneten Ringsegmenten (22A-22D) gebildet ist.

5. Verfahren zur Geräuschverringerung in einem Luftzuführkanal einer Gondelstruktur (10), die ein Gebläse eines Flugzeugtriebwerks mit einer Vielzahl von Schaufeln (120) umgibt, das auf einem mit einer Spitze versehenen Konus angebracht ist, umfassend die Schritte, die darin bestehen:
einen ersten Zustand zu erfassen,
als Reaktion auf den ersten Zustand einen einzigen, von einer Vielzahl ringförmiger, in Umfangsrichtung angeordneten Segmenten gebildeten und nur zwischen der Konuspitze und einer Eintrittskante der Vielzahl von Gebläseschaufeln angeordneten Ring (22) von einer Innenfläche (100A) der Gondelstruktur, welche einen Luftzuführkanal definiert, ausgehend und ohne sich hiervon entfernend radial nach innen auszufahren, um ein Hindernis mit Umfangs- und Radialkontinuität für die von dem Gebläse ausgehenden auf dem Ring auftreffenden und reflektierten Stoßwellen zu bilden,
einen von dem ersten verschiedenen zweiten Zustand zu erfassen, und
als Reaktion auf den zweiten Zustand den Ring aus der ausgefahrenen Position radial nach außen einzufahren, um die Innenfläche bündig abzuschließen und somit den Luftzuführkanal wiederherzustellen, wobei der Ring axial 30 bis 40 Zentimeter von der Eintrittskante der Schaufeln des Gebläses angeordnet und 1 bis 5 Millimeter an Dicke und Höhe misst und das Flugzeugtriebwerk einen Durchmesser von zirka 1,2 Meter hat.

6. Verfahren zur Geräuschverringerung nach Anspruch 5, bei dem das Gebläse ein Gebläse einer Turbomaschine eines Luftfahrzeugs ist und der erste und der zweite Zustand dem Einsatz der Start- oder Landevorgänge des Luftfahrzeugs bzw. dem Einsatz der Reiseflugdrehzahl des Luftfahrzeugs entsprechen.

7. Turbomaschine eines Luftfahrzeugs, die eine Gondelstruktur nach einem der Ansprüche 1 bis 4 umfasst.

## Claims

1. Nacelle structure (10) surrounding a fan (12) of an engine motor having a plurality of blades (120) mounted on a cone having a tip, the structure comprising:
· an air inlet (100) having an inside surface (100A) defining an air feed channel; and
· one ring (22) arranged in said air inlet only between the tip of the cone and a leading edge of said plurality of blades of the fan, said ring formed by a plurality of annular segments arranged in circumferential manner being selectively movable between a deployed position in which said ring is moved radially inwards from said inside surface without becoming spaced apart therefrom so as to form an obstacle of circumferential and radial continuity to incident shock waves coming from said fan and reflected by said ring, and a retracted position in which said ring is moved radially outwards from said deployed position so as to become flush with said inside surface and thus reconstitute said air feed channel, said ring being axially located at 30 to 40 centimeters from said fan blades leading edges, and presenting height and thickness of 1 to 5 millimeters, and the engine motor having a diameter about 1.2 meter.

2. Nacelle structure according to claim 1, **characterized in that** it includes an actuator (24) connected to said ring, a control device (26) in communication with said actuator, and a sensor (28), said sensor detecting first and second states corresponding respectively with said deployed and retracted positions, said control device being configured to cause said ring to move between said deployed and retracted positions in response to said first and second states detected by said sensor.

3. Nacelle structure according to claim 2, wherein said fan is an aircraft turbine engine fan and said first and second states correspond respectively to said aircraft performing takeoff or landing operations and to said aircraft performing cruising flight.

4. Nacelle structure according to claim 1 or claim 2, **characterized in that** said ring is formed by a plurality of annular segments (22A-22D) arranged circumferentially.

5. Method of reducing noise in an air feed channel of a nacelle structure (10) surrounding a fan of an engine motor having a plurality of blades (120) mounted on a cone having a tip, comprising the steps consisting in:
· detecting a first state;
· in response to said first state, deploying one ring (22) formed by a plurality of annular segments arranged in circumferential manner and located only between the tip of the cone and a leading edge of said plurality of blades of the fan, radially inwards from an inside surface (100A) of said nacelle structure defining an air feed channel and without becoming spaced apart therefrom in order to form an obstacle of circumferential and radial continuity to incident shock waves coming from said fan and reflected by said ring;
· detecting a second state different from the first stage; and
· in response to said second state, retracting said ring radially outwards from said deployed position in order to become flush with said inside surface, and thus reconstitute said air feed channel, said ring being axially located at 30 to 40 centimeters from said fan blades leading edges, and presenting height and thickness of 1 to 5 millimeters, and the engine motor having a diameter about 1.2 meter.

6. Noise reduction method according to claim 5, wherein said fan is an aircraft turbine engine fan and said first and second states correspond respectively to said aircraft performing takeoff or landing operations and to said aircraft performing cruising flight.

7. Aircraft turbine engine including a nacelle structure according to any one of claims 1 to 4.
